# EUROPEAN PATENT APPLICATION

(11) **EP 2 641 881 A1**
(43) Date of publication of application: **25.09.2013**
(21) Application number: 11841009.1
(22) Date of filing: 14.10.2011
(51) Int. Cl.: C03B 25/08, C03B 18/02

(54) **APPARATUS FOR MANUFACTURING GLASS SHEET AND METHOD FOR MANUFACTURING GLASS SHEET**

(30) Priority: 18.11.2010 JP 2010258102
(71) Applicant: Asahi Glass Company, Limited, Tokyo 100-8405 (JP)
(72) Inventor: TAKIGUCHI Tetsushi, Tokyo 100-8405 (JP); KAGAMI Tokuhiro, Tokyo 100-8405 (JP)
(74) Representative: Müller-Boré & Partner Patentanwälte
(86) International application number: PCT/JP2011/073736
(87) International publication number: WO 2012/066889

(57) **Abstract**

The present invention relates a device for manufacturing a glass sheet including: a float bath for storing a molten metal; an annealing furnace into which a glass ribbon molded into a plate shape is transferred on the molten metal; a chamber placed between the float bath and the annealing furnace; and a plurality of lift-out rolls that are provided in the chamber and that transfer the glass ribbon into the annealing furnace from the float bath, in which the apparatus includes a first air supply unit that supplies, as a cooling gas, an inactive gas to a space, which is situated downstream with respect to a contact point of the glass ribbon with the most downstream lift-out roll, of a space located below the glass ribbon in the chamber.

## Description

### TECHNICAL FIELD

The present invention relates to a device for manufacturing a glass sheet and a method for manufacturing the glass sheet.

### BACKGROUND OF THE INVENTION

A float process has been known as one of typical methods for manufacturing a glass sheet. In the float process, a molten glass is continually fed over a surface of a bath of a molten metal (e.g., a molten tin) in a float bath, thereby forming a glass ribbon of a band plate-shape. After being pulled out of the surface of the bath, the glass ribbon is drawn out of an outlet of the float bath and transferred over lift-out rolls. Next, the glass ribbon is transferred into an annealing furnace, where it is annealed while being transferred over conveyor rolls. The glass ribbon is subsequently transferred to the outside of the annealing furnace, where it is cooled to nearly a room temperature. The glass ribbon is then cut to a predetermined size, whereupon a glass sheet, or a product, comes out.

Incidentally, the glass ribbon is sometimes exposed to an ambient air in the course of being transferred from the float bath to the annealing furnace, thereby being influenced by the temperature of the ambient air. Distortion consequently occurs in the glass ribbon. Even when a temperature distribution in the annealing furnace is optimized, the distortion sometimes persists as warpage in product.

Accordingly, there has been a proposal to interpose a chamber having a heat insulating structure between the float bath and the annealing furnace and regulate a widthwise temperature distribution of the glass ribbon in the chamber (see; for instance, Patent Document 1). An apparatus for regulating a temperature distribution is constructed by heaters, a pipe, and the like.

The heaters are fixed on an interior wall of the chamber while separated above and below the glass ribbon. The heaters are disposed in a plurality of rows along a direction of transfer of the glass ribbon. The heaters belonging to each of the rows are separated from each other along the widthwise direction of the glass ribbon and are controlled in such a way that the temperature of the glass ribbon becomes uniform in its widthwise direction.

The pipe is placed on an upstream side in the chamber and ejects an inactive gas, like nitrogen, to a neighborhood of a center of an undersurface of the glass ribbon. A concentration of hydrogen in a reducing gas flowing from an interior of the float bath is diluted with the inactive gas, so that temperature variations or local heating, which would otherwise be induced by combustion flames of hydrogen, can be inhibited. This also makes it possible to prevent contamination of the interior of the float bath (i.e., oxidation of the molten metal). Incidentally, it has been said that ejecting the inactive gas after the gas is preheated is desirable in view of prevention of local cooling of the glass ribbon.

### BACKGROUND ART

### Patent Document

Patent Document 1: JP-A-6-227831

### SUMMARY OF THE INVENTION

### PROBLEMS THAT THE INVENTION IS TO SOLVE

However, since the glass ribbon is not actively cooled between the float bath and the annealing furnace in the related art, there are cases where the temperature distribution of the glass ribbon cannot be optimized in the direction of transfer of the glass ribbon. In this case, even when the temperature distribution of the glass ribbon is optimized in the annealing furnace, difficulty is encountered in eliminating warpage from a product.

Accordingly, in order to actively cool the glass ribbon in the chamber, conceivable measures are to eject a cooling gas from the conventional pipe. However, in this case, the glass ribbon becomes brittle under influence of thermal shock attributable to the cooling gas.

In particular, a glass substrate having a small thickness (a thickness of; for instance, 0.7 mm or less) is manufactured in recent years for use as a display panel, such as a liquid crystal display (LCD) and a plasma display (PDP). When such a glass sheet with a small thickness is manufactured, warpage in a product or a fracture in a glass ribbon are likely to occur as problems.

The invention has been conceived in light of the circumstances and aims at providing a device for manufacturing a glass sheet and a method for manufacturing a glass sheet that can inhibit occurrence of warpage in a product or a fracture in a glass ribbon.

### MEANS FOR SOLVING THE PROBLEMS

In order to solve the above-mentioned object, the invention provides a device for manufacturing a glass sheet comprising: a float bath for storing a molten metal; an annealing furnace into which a glass ribbon molded into a plate shape is transferred on the molten metal; a chamber placed between the float bath and the annealing furnace; and a plurality of lift-out rolls that are provided in the chamber and that transfer the glass ribbon into the annealing furnace from the float bath, wherein the apparatus comprises a first air supply unit that supplies, as a cooling gas, an inactive gas to a space, which is situated downstream with respect to a contact point of the glass ribbon with the most downstream lift-out roll, of a space located below the glass ribbon in the chamber.

It is preferable that the device for manufacturing a glass sheet of the invention, further comprises: a plurality of conveyor rolls that are placed in the annealing furnace and that convey the glass ribbon; and a second air supply unit that supplies a cooling gas to a space, which is situated upstream with respect to a contact point of the glass ribbon with the most upstream conveyor roll, of the space below and/or above the glass ribbon in the annealing furnace.

In the device for manufacturing a glass sheet of the invention, it is preferable that the cooling gas supplied by the second air supply unit contains at least any of air, steam, and an inactive gas.

It is preferable that the device for manufacturing a glass sheet of the invention, further comprises a third air supply unit that supplies an inactive gas to a space, which is situated upstream with respect to a contact point between the glass ribbon and the most upstream lift-out roll, of the space located below the glass ribbon in the chamber.

It is preferable that the device for manufacturing a glass sheet of the invention, further comprises a fourth air supply unit that supplies an inactive gas to at least a portion of a space, which exists between the contact point between the glass ribbon and the most upstream lift-out roll and the contact point between the glass ribbon and the most downstream lift-out roll, of the space situated below the glass ribbon in the chamber.

It is preferable that the device for manufacturing a glass sheet of the invention, further comprises a fifth air supply unit that supplies an inactive gas in a downward direction from a neighborhood of an upper wall of an outlet of the float bath in the chamber.

It is preferable that the device for manufacturing a glass sheet of the invention, further comprises a member for partitioning a space above the glass ribbon at an elevated position above the glass ribbon in the chamber.

It is preferable that the device for manufacturing a glass sheet of the invention, further comprises a heater in the chamber.

In the device for manufacturing a glass sheet of the invention, it is preferable that a heater is placed in a neighborhood of the outlet in the float bath.

In the device for manufacturing a glass sheet of the invention, it is preferable that the heater is placed in a neighborhood of an inlet in the annealing furnace.

In the device for manufacturing a glass sheet of the invention, it is preferable that the inactive gas supplied from the first air supply unit is a nitrogen gas.

In the device for manufacturing a glass sheet of the invention, it is preferable that the inactive gas supplied from the second air supply unit is a nitrogen gas.

In the device for manufacturing a glass sheet of the invention, it is preferable that the inactive gas supplied from the third air supply unit is a nitrogen gas.

In the device for manufacturing a glass sheet of the invention, it is preferable that the inactive gas supplied from the fourth air supply unit is a nitrogen gas.

In the device for manufacturing a glass sheet of the invention, it is preferable that the inactive gas supplied from the fifth air supply unit is a nitrogen gas.

In the device for manufacturing a glass sheet of the invention, it is preferable that a detector for detecting a fracture in the glass ribbon is placed in a neighborhood of an outlet in the chamber or the inlet in the annealing furnace.

In the device for manufacturing a glass sheet of the invention, it is preferable that the chamber has a heat insulating structure.

Moreover, the invention also provides a method for manufacturing a glass sheet comprising: forming a glass ribbon of a band plate-shape by continuously supplying a molten glass on a bath surface of a molten metal in a float bath; transferring the glass ribbon into a chamber from the float bath; transferring the glass ribbon over a plurality of lift-out rolls in the chamber, and transferring the glass ribbon into an annealing furnace followed by annealing the glass ribbon, wherein an inactive gas is supplied as a cooling gas to a space, which is situated downstream with respect to a contact point between the glass ribbon and the most downstream lift-out roll, of a space located below the glass ribbon in the chamber.

In the method for manufacturing a glass sheet of the invention, it is preferable that the glass sheet is an alkali-free glass.

In the method for manufacturing a glass sheet of the invention, it is preferable that the glass sheet contains, in terms of % by mass based on oxides, 50 to 66% of SiO₂, 10.5 to 24% of Al₂O₃, 0 to 12% of B₂O₃, 0 to 8% of MgO, 0 to 14.5% of CaO, 0 to 24% of SrO, 0 to 13.5% of BaO, 9 to 29.5% of MgO + CaO + SrO + BaO, and 0 to 5% of ZrO₂.

In the method for manufacturing a glass sheet of the invention, it is preferable that the glass sheet contains, in terms of % by mass based on the oxides, 58 to 66% of SiO₂, 15 to 22% of Al₂O₃, 5 to 12% of B₂O₃, 0 to 8% of MgO, 0 to 9% of CaO, 3 to 12.5% of SrO, 0 to 2% of BaO, and 9 to 18% of MgO + CaO + SrO + BaO.

### ADVANTAGE OF THE INVENTION

The invention can provide a device for manufacturing a glass sheet and a method for manufacturing a glass sheet that can inhibit occurrence of warpage in a product or a fracture in a glass ribbon.

### BRIEF DESCRIPTION OF THE DRAWINGS

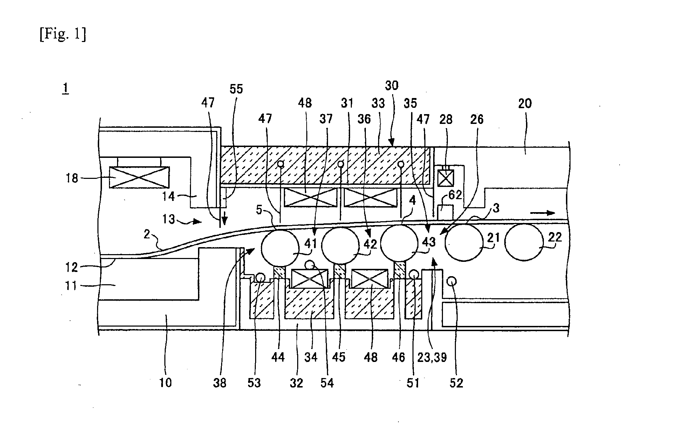

[Fig. 1] Fig. 1 is a partial cross sectional view of a device for manufacturing a glass sheet of a first embodiment of the invention.

### MODE FOR CARRYING OUT THE INVENTION

An embodiment for implementing the invention is hereunder described by reference to the drawings. Incidentally, in the following descriptions, a word "downstream" refers to a downstream in a direction of transfer of a glass ribbon, and a word "upstream" refers to an upstream in the direction of transfer of the glass ribbon.

Fig. 1 is a partial cross sectional view of a device for manufacturing a glass sheet of a first embodiment of the invention. As shown in Fig. 1, a device for manufacturing glass sheet 1 has a float bath 10, an annealing furnace 20, and a chamber 30 interposed between the float bath 10 and the annealing furnace 20.

A glass ribbon 2 formed so as to have a desirable width and a desirable thickness is lifted out of a bath surface 12 of molten metal 11 in the float bath 10 by dint of traction force of lift-out rolls 41 to 43 and conveyor rolls 21 and 22. The glass ribbon 2 is subsequently transferred into the chamber 30 from an outlet 13 of the float bath 10 and over the lift-out rolls 41 to 43. The glass ribbon 2 is then transferred to the interior of the annealing furnace 20 and annealed while being transferred above the conveyor rolls 21 and 22. The glass ribbon 2 is subsequently transferred to the outside of the annealing furnace 20 and cooled to nearly a room temperature. The glass ribbon is cut to a predetermined size, so that a glass sheet, or a product, thus comes out.

Glass used for a glass sheet is appropriately selected according to application of a glass sheet and the like. For instance, when the glass sheet is applied to a plasma display, soda lime glass which exhibits both a high strain temperature and a large coefficient of thermal expansion is used. When the glass sheet is applied to a liquid crystal display, alkaline metal adversely affects quality of the liquid crystal display. Hence, an alkali-free glass that does not substantially contain alkaline metals is used.

The term "alkali-free glass" refers to glass that does not intentionally contain alkaline metal oxides, such as Li₂O, Na₂O, and K₂O.

The device for manufacturing a glass sheet of the invention is particularly suitable for manufacturing an alkali-free glass and, more preferably, for the alkali-free glass that contains, in terms of % by mass based on the oxides,
50 to 66% of SiO₂,
10.5 to 24% of Al₂O₃,
0 to 12% of B₂O₃,
0 to 8% of MgO,
0 to 14.5% of CaO,
0 to 24% of SrO,
0 to 13.5% of BaO,
9 to 29.5% of MgO + CaO + SrO + BaO, and
0 to 5% of ZrO₂.

Furthermore, the alkali-free glass is more preferably an alkali-free glass containing, in terms of % by mass based on the oxides,
58 to 66% of SiO₂,
15 to 22% of Al₂O₃,
5 to 12% of B₂O₃,
0 to 8% of MgO,
0 to 9% of CaO,
3 to 12.5% of SrO,
0 to 2% of BaO, and
9 to 18% of MgO + CaO + SrO + BaO.

A plurality of types of raw materials suitable for a glass sheet are charged into a dissolver, where the materials are dissolved to produce molten glass. The molten glass is continuously fed into the float bath 10, whereby the glass ribbon 2 is produced. It is desirable to degas air bubbles contained in a molten glass before the molten glass is fed to the interior of the float bath 10.

The float bath 10 stores the molten metal 11. In order to prevent oxidation of the molten metal 11, an upper space in the float bath 10 is filled with a reducing gas containing nitrogen and hydrogen. Further, in order to prevent inflow of air from the outside, the upper space in the float bath 10 is set to pressure that is higher than the atmospheric pressure.

A heater 18 that adjusts the glass ribbon 2 to a temperature that enables plastic deformation is disposed in a vicinity of the outlet 13 of the float bath 10. Calorific power of the heater 18 can also be automatically controlled on the basis of a temperature achieved in the neighborhood of the outlet 13 in the float bath 10. For instance, a temperature sensor, such as a thermocouple, detects the temperature of the neighborhood of the outlet 13 of the float bath 10, and a detection result is supplied to a controller constructed by a microcomputer, or the like. On the basis of the detection result of the temperature sensor, the controller automatically controls the calorific power of the heater 18. Incidentally, likewise, calorific powers of heaters 28 and 48, which will be described later, can also be automatically controlled.

The temperature of the glass ribbon 2 acquired in the neighborhood of the outlet 13 of the float bath 10 is set appropriately in accordance with a glass type. For instance, a preferable temperature of the glass ribbon 2 is higher than an annealing temperature of a glass by 32 to 78°C. The annealing temperature of a glass is the one at which viscosity of a glass comes to 10¹³ dPa·s and is determined by a glass composition or the like.

The annealing furnace 20 is opened outside at a downstream outlet. Accordingly, an interior of the annealing furnace 20 is basically equal to the ambient. The interior of the annealing furnace 20 is in communication with the interior of the float bath 10 by way of an interior of the chamber 30.

In addition to the conveyor rolls 21 and 22, the heater 28, and the like is disposed in the annealing furnace 20. The conveyor rolls 21 and 22 each are rotationally driven by a drive unit, like a motor, and the glass ribbon 2 is horizontally transferred by dint of driving force.

The heater 28 is disposed in a vicinity of an inlet 23 in the annealing furnace 20. The heater 28 is disposed at a distance above and/or below the glass ribbon 2. The temperature of the glass ribbon 2 acquired in the vicinity of the inlet 23 in the annealing furnace 20 can be set to a desirable temperature by controlling the calorific power of the heater 28.

The chamber 30 is constructed by a hood 31 placed above the glass ribbon 2 and a dross box 32, or the like, placed below the glass ribbon 2. The chamber 30 may have a heat insulating structure. As shown in Fig. 1, for instance, at least a portion of an exterior wall of the hood 31 is covered with a heat insulating material 33, and at least a portion of an interior wall of the dross box 32 is covered with a heat insulating material 34. A common heat insulating material is used as the heat insulating materials 33 and 34. Adopting the heat insulating materials 33 and 34 makes it possible to inhibit dissipation of heat from the chamber 30, so that a temperature distribution of the glass ribbon 2 can be stabilized and that warpage in a product can be prevented.

In addition to the lift-out rolls 41 to 43 (hereinafter called simply "rolls 41 to 43"), contact members 44 to 46, drapes 47, heaters 48, and the like, are placed in the chamber 30. The rolls 41 to 43 are each rotationally driven by a drive unit, such as a motor, and transfer the glass ribbon 2 in a sloped upward direction by dint of the drive force. No limits are particularly imposed on the number of rolls, so long as the rolls are provided in numbers. The contact members 44 to 46 are disposed below the respective rolls 41 to 43.

The contact members 44 to 46 are formed from carbon. The contact members 44 to 46 contact slidingly with exterior peripheries of the corresponding rolls 41 to 43, thereby partitioning a space located below the glass ribbon 2 into a plurality of sub-spaces 35 to 38.

The drapes 47 are members that are situated above the glass ribbon 2 to partition a space located above the glass ribbon 2 into sub-spaces. The reducing gas run out of the outlet 13 of the float bath 10 is flowing toward the inlet 23 of the annealing furnace 20 in the space located above the glass ribbon 2.

The drapes 47 limit contamination, which would otherwise be caused by an air from the annealing furnace 20, to thus impose restrictions on an increase in the concentration of oxygen in the chamber 30. Combustion of hydrogen in the reducing gas can thereby be inhibited, so that temperature variations and local heating, which would otherwise be caused by combustion flames of hydrogen, can be inhibited.

The drapes 47 are formed from a refractory material, like a steel product and a glass material. The drapes 47 are formed so as not to impede transfer of the glass ribbon 2 and slightly spaced apart from an upper surface of the glass ribbon 2. The drapes 47 are suspended from the hood 31 and the heat insulating material 33 and placed at plural locations along the direction of transfer of the glass ribbon 2.

The heaters 48 are disposed, while being spaced apart from each other, above and below the glass ribbon 2. They are aligned in a plurality of rows along the direction of transfer of the glass ribbon 2. For instance, as shown in Fig. 1, the heaters 48 in each of the rows are interposed between the drapes 47 and between the contact members 44 to 46. The heaters 48 in each of the rows can also be split into sub-groups along the widthwise direction of the glass ribbon 2.

As above, the plurality of heaters 48 are placed while being split in the widthwise direction and the transfer direction of the glass ribbon 2 as well as above and below the glass ribbon 2. Calorific power of each of the heaters 48 is independently controlled, so that the temperature distribution of the glass ribbon 2 can be precisely controlled and that occurrence of warpage in a product can be inhibited. The plurality of heaters 48 can be independently controlled, or some of them can also be controlled collectively.

The manufacturing device 1 of the embodiment further includes first to fifth air supply pipes 51 to 55. The first to fifth air supply pipes 51 to 55, except the second air supply pipe 52, are intended to feed a gas into the chamber 30. In the meantime, the second air supply pipe 52 is intended to supply a gas into the annealing furnace 20.

The first air supply pipe 51 feeds an inactive gas, or a cooling gas, to the space 35, of the space below the glass ribbon 2 in the chamber 30, which is downstream with reference to a contact point 4 of the glass ribbon 2 with the most downstream roll 43. An air intake of the first air supply pipe 51 can be placed in or outside (beside) the space 35, so long as it is provided below the glass ribbon 2 in the chamber 30 and situated downstream with reference to the contact point 4 between the glass ribbon 2 and the most downstream roll 43. In the latter case, an inactive gas is let in the space 35 from the outside.

The inactive gas supplied from the first air supply pipe 51 cools the space 35, thereby cooling the undersurface of the glass ribbon 2 that is situated downstream with reference to the contact point 4 on the most downstream roll 43. The temperature of the glass ribbon 2 acquired in the neighborhood of an outlet 39 in the chamber 30 can thereby be set to a sufficiently low level, so that occurrence of warpage in a product can be inhibited.

A conceivable reason why occurrence of warpage in a product can be inhibited is that influence attributable to an abrupt change in coefficient of thermal expansion of glass that arises at a transition temperature of glass can be suppressed. The transition temperature of glass is lower than the annealing temperature of glass and the one at which glass viscosity has a value of 2×10¹³dPa·s.

In the embodiment, since the temperature of the glass ribbon 2 acquired in the neighborhood of the outlet 39 in the chamber 30 is set to a sufficiently low level, the glass ribbon 2 can pass through a temperature region close to the transition temperature of glass in a short period of time. Consequently, influence attributable to an abrupt change in the coefficient of thermal expansion of a glass which arises at the transition temperature of the glass can be lessened, so that occurrence of warpage in a product can be inhibited.

Although the temperature of the glass ribbon 2 acquired in the neighborhood of the outlet 39 in the chamber 30 is set, as appropriate, according to a glass type, it is preferable, for instance, that the temperature be set so as to fall within a temperature range from -50 to 10°C with reference to the annealing temperature of a glass. A more preferable temperature range is -50 to 5°C, and a still more preferable temperature range is -50 to 0°C.

The first air supply pipe 51 can continuously or intermittently supply the inactive gas such that the temperature of the glass ribbon 2 acquired in the vicinity of the outlet 39 in the chamber 30 falls within a predetermined temperature range.

Moreover, in the embodiment, since the glass ribbon 2 situated downstream with reference to the contact point 4 on the most downstream roll 43 is cooled, so that influence of thermal shock induced by the cooling gas can be lessened. The reason for this is that the temperature of the glass ribbon 2 tends to become lower as the glass ribbon 2 goes further downstream. As a consequence, occurrence of a fracture or deformation of the glass ribbon 2 can be prevented. This effect becomes noticeable, because strength of the glass ribbon 2 wanes as the glass ribbon 2 becomes thinner. Accordingly, the invention is suitable for a case where a glass sheet, or a product, has a thickness of 3 mm or less. When the thickness is 2 mm or less, the invention is preferable. When the thickness is 1.5 mm or less, the invention is more preferable. When the thickness is 0.7 mm or less, the invention is particularly preferable. A desirable thickness of the glass sheet is 0.1 mm or more from the viewpoint of ease of handling.

Furthermore, in the embodiment, there is cooled the glass ribbon 2 situated downstream with reference to the contact point 4 on the most downstream roll 43. Therefore, when the glass ribbon 2 becomes fractured, the ribbon is fractured at a downstream position with reference to the contact point 4 on the most downstream roll 43. Since a following portion of the glass ribbon 2 still stays on the plurality of rolls 41 to 43 at this time, transferring the following portion to the annealing furnace 20 is easy. Given that the glass ribbon 2 becomes fractured at an upstream position with reference to the most downstream roll 43, work for putting the following portion of the glass ribbon 2 on the roll 43, which is situated at an obliquely elevated position, against the gravitational force will be laborious.

Moreover, in the embodiment, the undersurface of the glass ribbon 2 is cooled, so that the glass ribbon 2 can be prevented from having a downwardly-oriented bow. This can consequently inhibit concentration of contact pressure inflicted by the roll 43 at a widthwise center of the glass ribbon 2 that is to be a product.

The second air supply pipe 52 feeds the cooling gas to an upstream space 26, of the space in the annealing furnace 20, which is situated below (and/or the space situated above) the glass ribbon 2 with reference to a contact point 3 of the glass ribbon 2 with the most upstream conveyor roll 21. An air intake of the second air supply pipe 52 can be situated in or outside the space 26, so long as the air intake is situated below (and/or above) the glass ribbon 2 in the annealing furnace 20 and at an upstream position with reference to the contact point 3 of the glass ribbon 2 with the most upstream conveyor roll 21. In the latter case, the cooling gas is let in the space 26 from the outside. The cooling gas cools the space 26, thereby cooling the undersurface (or/and the upper surface) of the glass ribbon 2 situated at an upstream position with reference to the contact point 3 on the most upstream conveyor roll 21. An advantage similar to that yielded when the temperature of the glass ribbon 2 acquired in the neighborhood of the outlet 39 in the chamber 30 is set to a sufficiently low level can thereby be yielded.

The second air supply pipe 52 can also continuously or intermittently supply the cooling gas such that the temperature of the glass ribbon 2 acquired in the neighborhood of the inlet 23 in the annealing furnace 20 falls within a predetermined temperature range.

The third air supply pipe 53 feeds the inactive gas to the upstream space 38 of the space situated below the glass ribbon 2 with reference to a contact point 5 of the glass ribbon 2 with the most upstream roll 41 in the chamber 30. An air intake of the third air supply pipe 53 can be situated in or outside the space 38, so long as the air intake is situated below the glass ribbon 2 in the chamber 30 and at an upstream position with reference to the contact point 5 of the glass ribbon 2 with the most upstream roll 41. In the latter case, the inactive gas is let in the space 38 from the outside. The inactive gas cools the space 38, thereby cooling the undersurface of the glass ribbon 2 situated at an upstream position with reference to the contact point 5 on the most upstream roll 41.

The fourth air supply pipe 54 feeds the inactive gas to, of the space located below the glass ribbon2 in the chamber 30, at least some space 37 between the contact point 5 of the glass ribbon 2 with the most upstream roll 41 and the contact point 4 of the glass ribbon 2 with the most downstream roll 43. An air intake of the fourth air supply pipe 54 can be situated in or outside the space 37, so long as the air intake is situated below the glass ribbon 2 in the chamber 30, at a downstream position with reference to the contact point 5 of the glass ribbon 2 with the most upstream roll 41, and an upstream position with reference to the contact point 4 of the glass ribbon 2 with the most downstream roll 43. In the latter case, the inactive gas is let in the space 37 from the outside. The inactive gas cools the space 37, thereby cooling at least a portion of the undersurface of the glass ribbon 2 situated of the contact point 5 on the most upstream roll 41 with the contact point 4 on the most downstream roll 43.

The fifth air supply pipe 55 feeds the inactive gas in a downward direction from a neighborhood of an upper wall 14 of the outlet 13 of the float bath 10 in the chamber 30. The inactive gas cools an upper surface of the glass ribbon 2 at an upstream position with respect to the contact point 5 on the most upstream roll 41. The inactive gas also dilutes the concentration of hydrogen in the reducing gas that flows out from the float bath 10, thereby inhibiting temperature variations and local heating, which would otherwise be caused by combustion flames of hydrogen.

The second to fifth air supply pipes 52 to 55 are used in combination with the first air supply pipe 51. Combined use of the air supply pipes makes it possible to reduce a flow volume of gas supplied by each of the air supply pipes while maintaining a total flow volume of gas supplied by the plurality of air supply pipes. Consequently, a temperature gradient of the glass ribbon 2 achieved in the direction of transfer of the glass ribbon can be made mild, so that occurrence of a fracture in the glass ribbon 2 can be prevented. No limitations are imposed on types and the number of combinations, and the first air supply pipe 51 can also be used alone.

The third to fifth air supply pipes 52 to 55 can also continuously or intermittently feed the inactive gas in such a way that the temperature of the glass ribbon 2 acquired in the neighborhood of the outlet 39 in the chamber 30 falls within a predetermined temperature range.

In order to prevent combustion of hydrogen in the chamber 30, an inactive gas is used as a gas to be fed by the first to fifth air supply pipes 51 to 55 except the second air supply pipe 52. The inactive gas includes an argon gas, or the like. However, in view of costs, a nitrogen gas is desirable. A nitrogen gas containing 1 volume ppm or less of oxygen concentration is used as the nitrogen gas. In the meantime, a gas containing at least any of an air, steam, and an inactive gas is used as a gas to be supplied by the second air supply pipe 52.

It is desirable that these gases to be supplied be squired by way of the air intakes of the respective air supply pipes 51 to 55 after being preliminarily heated. A desirable temperature of the gases to be supplied by way of the air intakes is 400°C or higher. When the temperature of the gases to be supplied is too low, the glass ribbon 2 might be fractured by thermal impact. Meanwhile, when the temperature of the gases to be supplied is too high, difficulty is encountered in sufficiently cooling the glass ribbon 2. Accordingly, it is desirable that the temperature of the gases to be supplied from the respective air intakes be lower than the temperature of the glass ribbon 2 that passes above or below the gases, by 80°C or more.

The flow volumes of the gases to be supplied may be automatically controlled according to a temperature distribution in the chamber 30. The internal temperature of the chamber 30 is, for instance, detected by a temperature sensor, such as a thermocouple, and a detection result is fed to a controller. On the basis of a detection result of the temperature sensor, the controller controls opening of electromagnetic valves disposed in the respective air supply pipes 51 to 55.

The manufacturing device 1 of the embodiment further includes a detector 62 for detecting a facture in the glass ribbon 2. As shown in Fig. 1, for instance, the detector 62 is placed in the neighborhood of the outlet 39 of the chamber 30 or the neighborhood of the inlet 23 in the annealing furnace 20. The fracture of the glass ribbon 2 can be detected early.

The detector 62 can have a common configuration, a mechanical configuration, or an optical configuration. For instance, the detector 62 can also be constructed by a roller member that is placed on the glass ribbon 2 and drops when the glass ribbon 2 become fractured or a position sensor that detects position of the roller member. Moreover, the detector 62 can also be constructed by a light receiving sensor that irradiates a side surface of the glass ribbon 2 with light, receives light reflected from the side surface, and detects a fracture from a change in the volume of received light.

Although the embodiment of the invention has been described above, the invention is not limited to the embodiment. The embodiment is susceptible to various alterations or replacements without departing the scope of the invention.

### EXAMPLE

Although the invention is hereunder specifically described by reference to an example, the invention is not limited by the example.

In Example 1, a glass sheet measuring 1800 mm long, 1500 mm wide, and 0.7 mm thick was manufactured by use of the manufacturing device 1 shown in Fig. 1. Glass having an annealing point of 711°C was used as a glass of the glass sheet.

A nitrogen gas was used as a gas to be supplied by the first to fifth air supply pipes 51 to 55 shown in Fig. 1, except the second air supply pipe 52. Air was used as a gas to be supplied by the second air supply pipe 52.

The temperature of the center of the glass ribbon 2 achieved along its widthwise direction was measured by a radiation thermometer in the neighborhood of the outlet 13 in the float bath 10 and the neighborhood of the outlet 39 in the chamber 30. A plane strain (residual stress), which serves as an index to warpage of a glass sheet to be manufactured, was determined by converting an optical path difference between linearly polarized waves that are measured with a birefringence measurement instrument and intersect at right angles (an optical path difference in a thicknesswise direction of the glass sheet). Table 1 shows measurement results.

In Example 1, as shown in Table 1, the glass ribbon 2 had a temperature of 755°C in the neighborhood of the outlet 13 in the float bath 10 and a temperature of 697°C in the neighborhood of the outlet 39 in the chamber 30. No fractures were found in the glass ribbon 2. The plane strain of the glass sheet exhibited a maximum value of 0.95 MPa and an average value of 0.72 MPa.

In the meantime, in Comparative Example 1, the glass sheet was manufactured in the same manner as in Example 1 except the fact that the gas was not supplied from the first to fifth air supply pipes 51 to 55. The glass sheet was measured in the same manner as in Example 1. Table 1 shows measurement results.

As shown in Table 1, in Comparative Example 1, the glass ribbon 2 had a temperature of 753°C in the neighborhood of the outlet 13 in the float bath 10 and a temperature of 722°C in the neighborhood of the outlet 39 in the chamber 30. No fractures were found in the glass ribbon 2. The plane strain of the glass sheet exhibited a maximum value of 1.71 MPa and an average value of 1.31 MPa.

**[Table 1]**

| | Temperature of glass ribbon (°C) | | Plane strain (MPa) | |
|---|---|---|---|---|
| | Outlet of float bath | Outlet of chamber | Maximum value | Average value |
| Example 1 | 755 | 697 | 0.95 | 0.72 |
| Comparative Example 1 | 753 | 722 | 1.71 | 1.31 |

While the invention has been described in detail with reference to specific embodiments thereof, it will be apparent to one skilled in the art that various changes and modifications can be made therein without departing from the spirit and scope thereof.
Incidentally, the present application is based on Japanese Patent Application No. 2010-258102 filed on November 18, 2010, and the contents are incorporated herein by reference.

### DESCRIPTION OF REFERENCE NUMERALS AND SIGNS

- 1: MANUFACTURING DEVICE
- 2: GLASS RIBBON
- 3 TO 5: CONTACT POINT
- 10: FLOAT BATH
- 11: MOLTEN METAL
- 12: BATH SURFACE
- 13: OUTLET
- 14: UPPER WALL OF OUTLET
- 18: HEATER
- 20: ANNEALING FURNACE
- 21, 22: CONVEYOR ROLL
- 23: INLET
- 26: SPACE
- 28: HEATER
- 30: CHAMBER
- 31: HOOD
- 32: DROSS BOX
- 33, 34: HEAT INSULATING MATERIAL
- 35 TO 38: SPACE
- 39: OUTLET
- 41 TO 43: LIFT-OUT ROLL
- 44 TO 46: CONTACT MEMBER
- 47: DRAPE
- 48: HEATER
- 51 TO 55: FIRST TO FIFTH AIR SUPPLY PIPES (FIST TO FIFTH AIR SUPPLY UNITS)
- 62: DETECTOR

## Claims

1. A device for manufacturing a glass sheet comprising:
a float bath for storing a molten metal;
an annealing furnace into which a glass ribbon molded into a plate shape is transferred on the molten metal;
a chamber placed between the float bath and the annealing furnace; and
a plurality of lift-out rolls that are provided in the chamber and that transfer the glass ribbon into the annealing furnace from the float bath,
wherein the apparatus comprises a first air supply unit that supplies, as a cooling gas, an inactive gas to a space, which is situated downstream with respect to a contact point of the glass ribbon with the most downstream lift-out roll, of a space located below the glass ribbon in the chamber.

2. The device for manufacturing a glass sheet according to claim 1, further comprising:
a plurality of conveyor rolls that are placed in the annealing furnace and that convey the glass ribbon; and
a second air supply unit that supplies a cooling gas to a space, which is situated upstream with respect to a contact point of the glass ribbon with the most upstream conveyor roll, of the space below and/or above the glass ribbon in the annealing furnace.

3. The device for manufacturing a glass sheet according to claim 2, wherein the cooling gas supplied by the second air supply unit contains at least any of air, steam, and an inactive gas.

4. The device for manufacturing a glass sheet according to any one of claims 1 to 3, further comprising a third air supply unit that supplies an inactive gas to a space, which is situated upstream with respect to a contact point between the glass ribbon and the most upstream lift-out roll, of the space located below the glass ribbon in the chamber.

5. The device for manufacturing a glass sheet according to any one of claims 1 to 4, further comprising a fourth air supply unit that supplies an inactive gas to at least a portion of a space, which exists between the contact point between the glass ribbon and the most upstream lift-out roll and the contact point between the glass ribbon and the most downstream lift-out roll, of the space situated below the glass ribbon in the chamber.

6. The device for manufacturing a glass sheet according to any one of claims 1 to 5, further comprising a fifth air supply unit that supplies an inactive gas in a downward direction from a neighborhood of an upper wall of an outlet of the float bath in the chamber.

7. The device for manufacturing a glass sheet according to any one of claims 1 to 6, further comprising a member for partitioning a space above the glass ribbon at an elevated position above the glass ribbon in the chamber.

8. The device for manufacturing a glass sheet according to any one of claims 1 to 7, further comprising a heater in the chamber.

9. The device for manufacturing a glass sheet according to any one of claims 1 to 8, wherein a heater is placed in a neighborhood of the outlet in the float bath.

10. The device for manufacturing a glass sheet according to any one of claims 1 to 9, wherein the heater is placed in a neighborhood of an inlet in the annealing furnace.

11. The device for manufacturing a glass sheet according to any one of claims 1 to 10, wherein the inactive gas supplied from the first air supply unit is a nitrogen gas.

12. The device for manufacturing a glass sheet according to claim 3, wherein the inactive gas supplied from the second air supply unit is a nitrogen gas.

13. The device for manufacturing a glass sheet according to claim 4, wherein the inactive gas supplied from the third air supply unit is a nitrogen gas.

14. The device for manufacturing a glass sheet according to claim 5, wherein the inactive gas supplied from the fourth air supply unit is a nitrogen gas.

15. The device for manufacturing a glass sheet according to claim 6, wherein the inactive gas supplied from the fifth air supply unit is a nitrogen gas.

16. The device for manufacturing a glass sheet according to any one of claims 1 to 15, wherein a detector for detecting a fracture in the glass ribbon is placed in a neighborhood of an outlet in the chamber or the inlet in the annealing furnace.

17. The device for manufacturing a glass sheet according to any one of claims 1 to 16, wherein the chamber has a heat insulating structure.

18. A method for manufacturing a glass sheet comprising:
forming a glass ribbon of a band plate-shape by continuously supplying a molten glass on a bath surface of a molten metal in a float bath;
transferring the glass ribbon into a chamber from the float bath;
transferring the glass ribbon over a plurality of lift-out rolls in the chamber, and
transferring the glass ribbon into an annealing furnace followed by annealing the glass ribbon,
wherein an inactive gas is supplied as a cooling gas to a space, which is situated downstream with respect to a contact point between the glass ribbon and the most downstream lift-out roll, of a space located below the glass ribbon in the chamber.

19. The method for manufacturing a glass sheet according to claim 18, wherein the glass sheet is an alkali-free glass.

20. The method for manufacturing a glass sheet according to claim 19, wherein the glass sheet contains, in terms of % by mass based on oxides,
50 to 66% of SiO₂,
10.5 to 24% of Al₂O₃,
0 to 12% of B₂O₃,
0 to 8% of MgO,
0 to 14.5% of CaO,
0 to 24% of SrO,
0 to 13.5% of BaO,
9 to 29.5% of MgO + CaO + SrO + BaO, and
0 to 5% of ZrO₂.

21. The method for manufacturing glass sheet according to claim 20, wherein the glass sheet contains, in terms of % by mass based on the oxides,
58 to 66% of SiO₂,
15 to 22% of Al₂O₃,
5 to 12% of B₂O₃,
0 to 8% of MgO,
0 to 9% of CaO,
3 to 12.5% of SrO,
0 to 2% of BaO, and
9 to 18% of MgO + CaO + SrO + BaO.
